# EUROPÄISCHE PATENTSCHRIFT

(11) **EP 0 525 441 B1**
(45) Veröffentlichungstag und Bekanntmachung des Hinweises auf die Patenterteilung: **11.01.1995**
(21) Anmeldenummer: 92111425.2
(22) Anmeldetag: 06.07.1992
(51) Int. Cl.: A01D 33/08, A23N 17/02, A01F 29/00

(54) **Transport- und Reinigungsvorrichtung für Futterfrüchte**
Transport and cleaning device for fodder crops
Dispositif à transporter et nettoyer du fourrage

(30) Priorität: 17.07.1991 DE 4123611
(43) Veröffentlichungstag der Anmeldung: 03.02.1993
(73) Patentinhaber: De Dissel Beheer B.V., NL-7122 JH Aalten (NL)
(72) Erfinder: Ansink, Jan Christian, NL-7120 AA Aalten (NL)
(74) Vertreter: Schulze Horn, Stefan, Dipl.-Ing. M.Sc.

(56) Entgegenhaltungen:
- EP-A- 0 392 871
- EP-A- 0 455 309
- BE-A- 890 468
- DE-C- 497 273
- DE-U- 9 102 733
- GB-A- 1 512 206
- GB-A- 2 008 442

## Beschreibung

Die Erfindung betrifft eine Transport- und Reinigungsvorrichtung für Futterfrüchte, gemäß dem Oberbegriff des Patentanspruchs 1.

Eine Vorrichtung der genannten Art ist aus der GB 1 512 206 bekannt. Mit dieser Vorrichtung können zwar Futterfrüchte aufgenommen und transportiert sowie mechanisch gereinigt werden, jedoch können die Futterfrüchte nach dem Transport und ihrer Reinigung lediglich durch Auskippen wieder aus der Vorrichtung entladen werden. Ein gezieltes Austragen der Futterfrüchte oder sogar eine weitere Aufbereitung ist bei dieser bekannten Vorrichtung allerdings nicht möglich.

Es stellt sich daher die Aufgabe, eine Vorrichtung der eingangs genannten Art zu schaffen, die neben einem Transport und einer Reinigung auch ein gezieltes Austragen und/oder eine weitere Aufbereitung der Futterfrüchte ermöglicht.

Die Lösung dieser Aufgabe gelingt erfindungsgemäß durch eine Transport- und Reinigungsvorrichtung der eingangs genannten Art mit den kennzeichnenden Merkmalen des Patentanspruchs 1.

Mit der neuen Vorrichtung können die Feldfrüchte sowohl transportiert und gereinigt als auch mittels der Förderschnecke gezielt und dosiert durch die Austragsöffnung seitwärts ausgetragen werden. Insbesondere wird so die Möglichkeit geschaffen die Vorrichtung entlang eines Stallganges zu verfahren und dabei die Futterfrüchte unmittelbar in entlang des Stallganges angeordnete Futtertröge auszutragen. Hierdurch kann bisher erforderliche manuelle Arbeit oder eine gesonderte Austragsvorrichtung eingespart werden. Die neue Vorrichtung kann selbstverständlich bei Bedarf auch nur für Teilaufgaben genutzt werden, was insgesamt eine flexible Einsetzbarkeit und einen hohen betrieblichen Nutzwert der Vorrichtung ergibt.

Für die Förderschnecke ist bevorzugt vorgesehen daß ihr Durchmesser etwa ein Zehntel bis ein Viertel des Trommeldurchmessers beträgt. Hierdurch wird zum einen der Innenraum der Trommel nicht übermäßig verkleinert und zum anderen eine sichere Förderung der Futterfrüchte mittels der Förderschnecke sichergestellt.

Um bei der Rotation der Trommel während des Reinigungsvorganges eine unerwünschte Beschädigung der Futterfrüchte durch die Förderschnecke, genauer deren Schneckenwendel, zu vermeiden, schlägt die Erfindung in einer bevorzugten Ausführungsform vor, daß die Förderschnecke über im wesentlichen ihre gesamte Länge und über ein Drittel bis zwei Drittel ihres Umfanges von einer rinnenförmigen Blechwanne umgeben ist, die überwiegend an der in Arbeitsdrehrichtung der Trommel weisenden Seite des Umfangsbereiches der Förderschnecke angeordnet ist. Bei Rotation der Trommel in deren Arbeitsdrehrichtung werden die Futterfrüchte in der Trommel durch die Blechwanne von der Förderschnecke abgelenkt und über diese hinweggeführt. Hinter der Förderschnecke fallen die Futterfrüchte wieder auf die Innenfläche des Trommelmantels, wobei durch diesen Fall sogar ein verbesserter Reinigungseffekt erzielt wird. Da hierbei die Fallhöhe gering ist, treten andererseits Beschädigungen der Futterfrüchte praktisch nicht auf. Beim Austragen der Futterfrüchte dient die Blechwanne als Führung und verhindert ein seitliches Ausweichen der auszutragenden Futterfrüchte von der Förderschnecke.

Um ein Stauen und zu weit gehendes Mitnehmen der Futterfrüchte bei der Reinigungsrotation der Trommel durch die zuvor beschriebene Blechwanne zu verhindern ist weiterhin bevorzugt vorgesehen, daß der Trommelmantel in dem in Arbeitsdrehrichtung der Trommel gesehen vor der Förderschnecke liegenden Trommelbereich in Richtung einer trommelinnenseitigen Tangente an den Förderschneckenumfang zum Trommelinneren hin eingezogen ist. Durch den eingezogenen Trommelmantelbereich werden die Futterfrüchte sanft angehoben und in ihrer für die Reinigung erwünschten Rollbewegung auch beim Überlauf über die Förderschnecke und deren Blechwanne nicht behindert.

Da je nach Art der Futterfrüchte und je nach dem vorgesehenen Einsatzzweck der Vorrichtung häufig eine weitere Aufbereitung, insbesondere Zerkleinerung, der Futterfrüchte zweckmäßig oder sogar erforderlich ist, ist bevorzugt vorgesehen, daß ein Schneidwerkzeug an oder vor der Austragöffnung der Trommel angebracht ist. Es können also problemlos mittels des Schneidwerkzeuges die Futterfrüchte während des Austragens zerkleinert werden, was weiter zu einer hohen betrieblichen Wirtschaftlichkeit der Vorrichtung beiträgt. Bei Bedarf kann auch ein Betrieb der Vorrichtung ohne Schneidwerkzeug erfolgen, wobei dann die Futterfrüchte unzerkleinert ausgetragen werden.

Weitere Ausgestaltungen der Vorrichtung, betreffend insbesondere das Schneidwerkzeug, sind in den Ansprüchen 6 bis 9 angegeben.

Zwecks einer möglichst einfachen Beladbarkeit der Trommel mit Futterfrüchten ist bevorzugt vorgesehen, daß die Trommel entlang einer zur Trommel-Längsmittelachse parallelen Ebene geteilt ist, daß der erste Teil der Trommel mit der Förderschnecke und mit den Drehantriebsmitteln für die Förderschnecke und für die Trommel über die Tragarmanordnung gehalten ist und daß der zweite Teil der Trommel über eine in der Mantelfläche der Trommel liegende Scharnieranordnung mittels eines Kraftantriebs gegen den ersten Teil der Trommel zu deren Öffnen und Schließen verschwenkbar ist. Hierdurch kann eine große Ladeöffnung der Trommel zur Verfügung gestellt werden und es ist zugleich eine relativ einfache Konstruktion ohne verschleißanfällige Hebel- und Gelenkanordnungen möglich.

In diesem Zusammenhang ist weiter bevorzugt vorgesehen, daß die Trommel einen abgeflachten Mantelbereich aufweist, daß die Teilungsebene durch die in Arbeitsdrehrichtung der Trommel nach vorn weisende Längskante des abgeflachten Mantelbereiches verläuft und daß diese Längskante zur Bildung einer Ladeschaufel im Querschnitt keilförmig ausgebildet ist. Die Futterfrüchte können somit problemlos und ohne größere Beschädigung z.B. aus einer Miete aufgenommen werden, indem die geöffnete, abgesenkte Trommel mit der keilförmigen Kante voraus verfahren und anschließend angehoben und geschlossen wird.

Um die Trommel in den Betriebszuständen der Vorrichtung, in denen eine Drehung der Trommel nicht erfolgt, exakt in der jeweils richtigen Verdrehstellung festzulegen, ist bevorzugt vorgesehen, daß die Trommel mittels einer Arretiereinrichtung zum einen in einer Stellung, in welcher der abgeflachte Mantelbereich parallel zur Bodenoberfläche verläuft, und zum anderen in einer Stellung, in welcher die Förderschnecke und das Schneidwerkzeug ihre Austragposition einnehmen, festlegbar ist.

Hinsichtlich des Trommelmantels schlägt die Erfindung als bevorzugte Gestaltung vor, daß dieser aus in Umfangsrichtung umlaufenden Profilen sowie aus quer zu diesen verlaufenden und mit diesen verbundenen die Mantelfläche bildenden Rundstäben oder Rohren gebildet ist. Diese Konstruktion ist einfach in der Herstellung und ergibt eine gute Stabilität. Außerdem werden die Futterfrüchte bei ihrem Abrollen innerhalb der Trommel durch die Rundstäbe oder Rohre relativ schonend behandelt und nicht schon während der Reinigung außenseitig unnötig beschädigt.

Da an Traktoren oder vergleichbaren Arbeitsfahrzeugen, wie Baggern oder Raupen, üblicherweise eine Hydraulikanlage vorhanden ist, mit der Anbaugeräte antreibbar sind, ist hinsichtlich des Antriebes der neuen Vorrichtung zweckmäßig vorgesehen, daß die Drehantriebe mit Hydraulikmotoren ausgebildet sind und daß der Kraftantrieb aus hydraulischen Kolben-Zylinder-Einheiten gebildet ist.

Im folgenden wird ein Ausführungsbeispiel der Vorrichtung anhand einer Zeichnung erläutert. Die Figuren der Zeichnung zeigen:
- Figur 1: eine Transport- und Reinigungsvorrichtung für Futterfrüchte, mit einer geöffneten Trommel, in perspektivischer Ansicht auf die linke und hintere Vorrichtungsseite,
- Figur 2: die Vorrichtung aus Figur 1 mit geschlossener Trommel während eines Reinigungsvorganges, in perspektivischer Ansicht auf die rechte und hintere Vorrichtungsseite, und
- Figur 3: die Vorrichtung aus Figur 1 und 2 mit geschlossener Trommel in Austragstellung, in perspektivischer Ansicht auf die rechte und vordere Vorrichtungsseite.

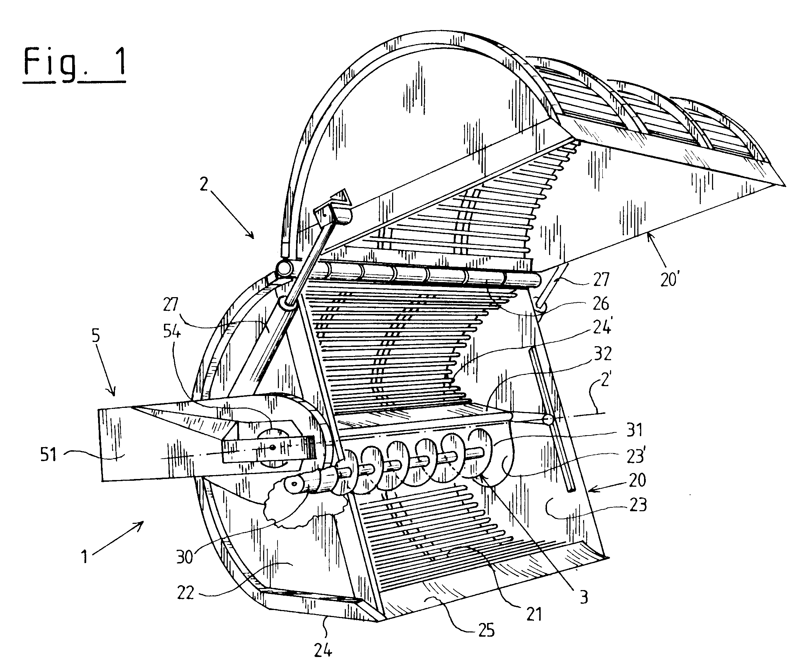

Wie die Figur 1 der Zeichnung zeigt, besteht das dargestellte Ausführungsbeispiel der Transport- und Reinigungsvorrichtung 1 für Futterfrüchte im wesentlichen aus einer zweiteiligen, hier geöffneten, im wesentlichen zylindrischen Trommel 2, einer diese Trommel 2 um deren Längsmittelachse 2' drehbar tragenden Tragarmanordnung 5 und einer in der Trommel 2 angeordneten Förderschnecke 3. Mittels der Tragarmanordnung 5 ist die Vorrichtung 1 mit einem Traktor oder dergl. Arbeitsfahrzeug, das hier nicht eigens dargestellt ist, verbindbar und von diesem aus antreibbar sowie heb- und senkbar und verfahrbar. Die Längsmittelachse 2', die zugleich die Drehachse der Trommel 2 darstellt, verläuft im wesentlichen in horizontaler Richtung quer zur Längsachse des Traktors.

Die hier geöffnet dargestellte Trommel 2 besteht aus den beiden Trommelteilen 20 und 20', wobei diese beiden Trommelteile 20 und 20' über eine Scharnieranordnung 26, die entlang des Trommelmantels 21 verläuft, gelenkig miteinander verbunden und durch ein Paar von Kolben-Zylinder-Einheiten 27 gegeneinander verschwenkbar sind. Die Kolben-Zylinder-Einheiten 27 sind auf nicht näher dargestellte Weise vom Traktor aus über Hydraulikölleitungen und -schläuche sowie über eine an dem einen Achsstummel der Trommel 2 vorgesehene drehbare Hydraulikölzuführung hydraulisch betätigbar.

An der in der Figur 1 vorderen Stirnwand 22 der Trommel 2 ist zum einen ein in die Tragarmanordnung 5, genauer deren einen Längsträger 51 integrierter Drehantrieb 54 vorgesehen, mittels welchem die Trommel 2 um ihre Längsmittelachse 2' in Drehung versetzbar ist. Zum anderen ist an derselben Stirnwand 22 der Trommel 2 in diese zum Trommelinneren hin ein weiterer Drehantrieb 30 eingebaut, der zum Antrieb der im Inneren der Trommel 2 befindlichen Förderschnecke 3 dient und der zusammen mit der Trommel 2 drehbar ist. Die Förderschnecke 3 erstreckt sich dabei im wesentlichen über die gesamte axiale Länge der Trommel 2 und verläuft entlang des Trommelmantels 21 parallel zur Längsmittelachse 2'. An ihrem in Figur 1 linken Ende, d.h. an dem dem zugehörigen Drehantrieb 30 zugewandten Ende, ist die Förderschnecke 3 an der Stirnwand 22 der Trommel 2 gelagert. Der Drehantrieb 30 ist vorzugsweise ein Hydraulikmotor, der ebenfalls über in und an der Achse der Trommel 2 angeordnete drehbare Hydraulikölzuführungen unabhängig von der Verdrehstellung der Trommel 2 und ohne Behinderung der Trommeldrehbarkeit mit Hydrauliköl versorgbar ist. Da der Drehantrieb 30 teilweise in die Trommel 2 hineinragt, ist hier zweckmäßig die Förderschnecke 3 mit einem hohlen Endabschnitt ausgebildet, um den Drehantrieb 30 außenseitig zu umgeben. Der hier liegende Schneckenteil kann dabei mit einem entsprechend niedriger ausgebildeten Schneckenwendelabschnitt versehen sein, so daß der Schneckenaußendurchmesser über die gesamte Schneckenlänge gleich bleibt und innerhalb der Trommel 2 keine wendelfreien Schneckenabschnitte verbleiben. Das freie Ende 31 der Förderschnecke 3 liegt im Bereich einer Austragsöffnung 23' in der zweiten, in Figur 1 hinteren Stirnwand 23 der Trommel 2. Über einen Teil ihres Umfangs, in Figur 1 über den oberen und hinteren Umfangsbereich, ist die Förderschnecke 3 von einer Blechwanne 32 umgeben. Anschließend an diese Blechwanne 32 ist der Trommelmantel 21 mit einem zum Trommelinneren hin eingezogenen Mantelbereich 24' ausgebildet.

Schließlich ist in Figur 1 im unteren Teil der Trommel 2 noch ein abgeflachter Mantelbereich 24 erkennbar, der in der hier dargestellten Stellung der Vorrichtung 1 parallel zu einer Bodenoberfläche (nicht dargestellt) verläuft. Die hier vorderseitige freie Längskante 25 des abgeflachten Mantelbereiches 24 ist zur Bildung einer Ladeschaufel mit einer im Querschnitt keilförmigen Ladeschaufelkante 25 ausgebildet.

In dem hier gezeigten Funktionszustand der Vorrichtung 1 kann diese unter Rückwärtsfahrt des zugehörigen Traktors mit dem hier unteren Teil 20 der Trommel 2 in eine Futterfrüchtemiete eingefahren werden, um das Innere der Trommel 2 mit einer Charge von Futterfrüchten zu füllen. Durch Drehen der Trommel 2 gegen den Uhrzeigersinn und gleichzeitiges Anheben werden die Futterfrüchte vollständig in das Innere der Trommel 2 befördert. Anschliessend kann durch Betätigen der Kolben-Zylinder-Einheit 27 der in Figur 1 obere Trommelteil 20' abgesenkt werden, bis die Trommel 2 vollständig geschlossen ist und eine im wesentlichen zylindrische Gestalt aufweist.

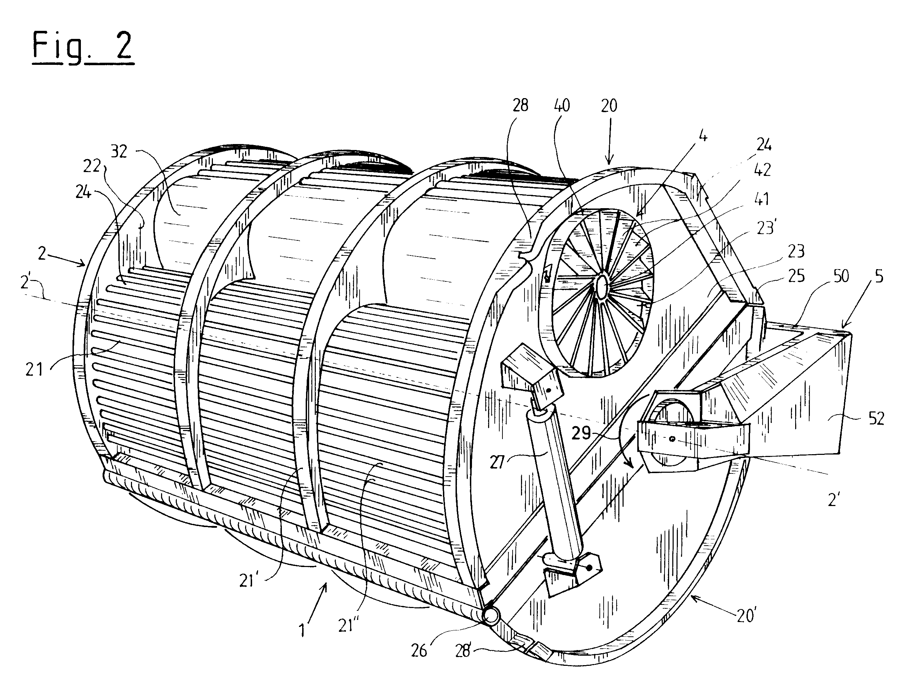

Dieser geschlossene Zustand der Trommel 2 der Vorrichtung 1 ist in Figur 2 dargestellt, wobei nun die andere Stirnwand 23 der beiden Stirnwände 22 und 23 der Trommel 2 dem Betrachter zugewandt ist. Außerdem ist die Trommel 2 um ihre als Drehachse dienende Längsmittelachse 2' verdreht, wobei diese Drehung entsprechend dem Drehpfeil 29 erfolgt, der die Arbeitsdrehrichtung der Trommel 2 angibt. Durch diese Drehung der Trommel 2 rollen die zu reinigenden Futterfrüchte im Inneren der Trommel ab, wobei an den Futterfrüchten anhaftende Erd- oder Sandreste mechanisch gelöst werden und durch die Zwischenräume des durch Rundstäbe oder Rohre 21'' gebildeten Trommelmantels 21 nach unten herausfallen. Hierzu ist die Vorrichtung 1 insgesamt angehoben, so daß die Trommel keine Bodenberührung hat und eine freie Drehung um die Achse 2' ausführen kann. Für die Erzeugung dieser Drehung wird der anhand von Figur 1 bereits beschriebene Drehantrieb 54 mittels der bei dem zugehörigen, hier ebenfalls nicht dargestellen Traktor vorhanden Hydraulikanlage mit Hydrauliköl versorgt und so aktiviert. Zusätzlich kann dabei die Trommel 2 auch über einen Teil ihrer Höhe, beispielsweise etwa die untere Hälfte, in ein Wasserbecken getaucht werden, um die Reinigungswirkung zu verbessern.

An der in Figur 2 dem Betrachter zugewandten Stirnwand 23 der Trommel 2 ist nun im oberen Stirnwandbereich die Austragöffnung 23' erkennbar, an der hier zusätzlich ein Schneidwerkzeug 4 angebracht ist. Dieses Schneidwerkzeug 4 besteht aus einem die Austragsöffnung 23' umgebenden Außenring 40 und einer zentralen Nabe 41 sowie aus einer Anzahl von zwischen Außenring und Nabe turbinenschaufelartig angeordneten Schneidmessern 42. Das Schneidwerkzeug 4 ist bei dem hier dargestellten Ausführungsbeispiel bajonettverschlußartig mit der Stirnwand 23 der Trommel 2 verbunden, so daß ein leichtes Abnehmen des Schneidwerkzeuges 4 oder ein Austauschen des Schneidwerkzeuges 4 gegen ein anderes Werkzeug ermöglicht wird. Weiterhin ist vorgesehen, daß die dem Trommelinneren zugewandte Seite der Nabe 41 und das anliegende Ende der Förderschnecke 3 mit zusammenwirkenden Zentrierungs- und Lagerungsmitteln für eine zweite Schneckenlagerung ausgebildet sind, wozu, was in der Zeichnung nicht eigens dargestellt ist, die Nabe 41 einen vorragenden konischen Achsstummel und die Schnecke 3 eine entsprechende Aufnahmeöffnung mit einem zwischenliegenden Gleit- oder Wälzlager aufweist.

Weiterhin zeigt die Figur 2 der Zeichnung am Umfang der Stirnwand 23 zwei Arretiereinrichtungen 28 und 28', die aus jeweils zwei aufeinander zulaufenden ansteigenden Flanken mit einem zwischen diesen gebildeten Schlitz gebildet sind. Diese Arretiereinrichtungen 28, 28' dienen dazu, die Trommel 2 der Vorrichtung 1 in ausgewählten Verdrehungsstellungen zu arretieren und in ihrer Lage zu sichern. Hierzu ist innerhalb des hier sichtbaren Längsträgers 52 der Tragarmanordnung 5 eine Sperrklinke angeordnet, die fernbetätigbar ist und die mit dem Schlitz der beiden Arretiereinrichtungen 28 und 28' zusammenwirkend die Trommel 2 gegen eine Drehung festlegen kann. In dem Zustand der Vorrichtung 1 gemäß Figur 2 ist die Arretierung außer Funktion, so daß eine fortgesetzte Drehung der Trommel 2 um ihre Achse 2' ermöglicht wird. Außerdem ist an der Stirnwand 23 die eine Kolben-Zylinder-Einheit 27 für die Verschwenkung der beiden Trommelteile 20 und 20' gegeneinander erkennbar, wobei hier die Kolben-Zylinder-Einheit 27 so mit Druck beaufschlagt ist, daß ein fester Verschluß der Trommel 2 gewährleistet ist.

Im in Figur 2 oberen Teil der Trommel 2 ist am Trommelmantel 21 die Blechwanne 32 für die Förderschnecke 3, die hier selbst nicht sichtbar ist, erkennbar. Nach unten bzw. vorne hin schließt sich an die Blechwanne 32 der eingezogene Mantelbereich 24 des Trommelmantels 21 an. Im unteren Teil des Trommelmantels ist schließlich wieder die Scharnieranordnung 26 für die Verschwenkung der beiden Trommelteile 20 und 20' gegeneinander erkennbar.

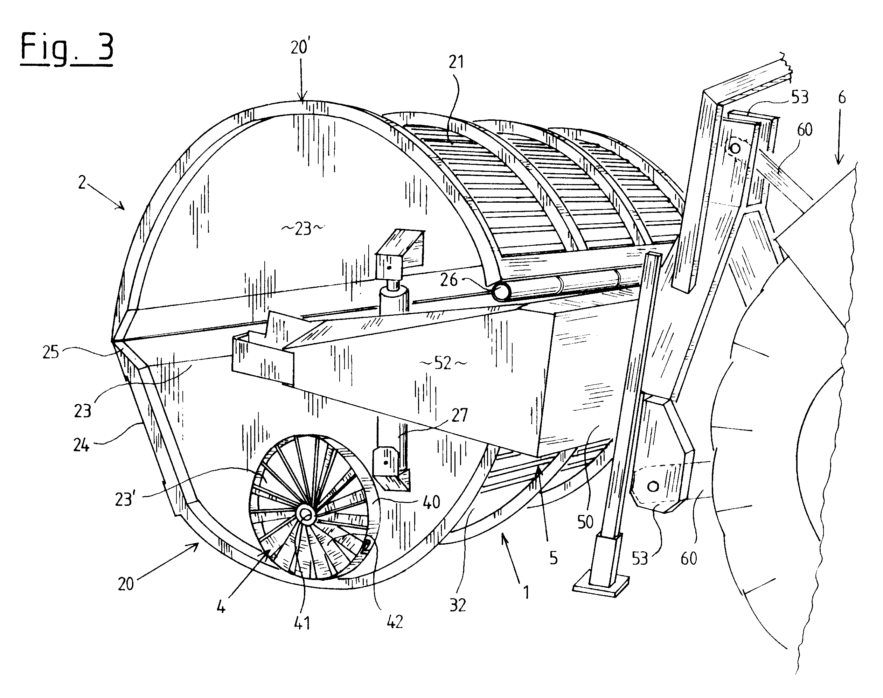

Figur 3 der Zeichnung schließlich zeigt die Vorrichtung 1 in Austragsstellung der Trommel 2, wobei die Trommel 2 so positioniert ist, daß die hier nicht sichtbare Förderschnecke 3 im wesentlichen an der tiefsten Stelle der Trommel 2 zu liegen kommt. In dieser Stellung ist die Trommel 2 mittels der anhand von Figur 2 beschriebenen Arretiereinrichtung gegen eine weitere Verdrehung festlegbar. Entsprechend der Lage der Förderschnecke 3 liegt nun auch das Schneidwerkzeug 4 im wesentlichen am tiefsten Punkt der Stirnwand 23 der Trommel 2 und es kann nun mittels Drehung der Förderschnecke 3 um ihre Längsachse eine Förderung der Futterfrüchte aus dem Inneren der Trommel 2 durch das Schneidwerkzeug 4 hindurch seitlich nach außen erfolgen, wobei die Futterfrüchte bei ihrem Durchlauf durch das Schneidwerkzeug 4 zerkleinert werden. Während dieses Zerkleinerns und Ausbringens der Futterfrüchte kann die Vorrichtung 1 mittels eines hier andeutungsweise dargestellten Traktors 6 z.B. entlang eines Stallganges verfahren werden, um die zerkleinerten Futterfrüchte unmittelbar in Futtertröge auszubringen.

Weiterhin zeigt die Figur 3 eine bevorzugte Art der Verbindung der Vorrichtung 1 mit dem Traktor 6, wobei diese Verbindung hier über die an dem Traktor 6 vorhandene Dreipunktkupplung 60 erfolgt. Hierzu ist die Tragarmanordnung 5 der Vorrichtung 1 traktorseitig mit entsprechenden Kupplungselementen 53, 53' versehen, die zu der Dreipunktkupplung 60 passen. Alternativ kann auch eine andere, an sich bekannte Kupplungseinrichtung, z.B. eine Dreieck-Schnellkupplung, zur Anwendung kommen. Auch eine Anbringung der Vorrichtung 1 an den Frontladerarmen eines Arbeitsfahrzeuges ist möglich. Die weiterhin für den Betrieb der Vorrichtung 1 erforderlichen Hydraulikverbindungen und -steuerventile sind hier, da allgemein bekannt, nicht eigens dargestellt. Bezüglich der weiteren in Figur 3 verwendeten Bezugsziffern wird auf die vorangehenden Beschreibungsteile verwiesen.

## Patentansprüche

1. Transport- und Reinigungsvorrichtung für Futterfrüchte, insbesondere Rüben, Kartoffeln, Möhren, Zwiebeln, Kohl oder Obst, wie z.B. Äpfel, wobei die Vorrichtung (1) eine im wesentlichen zylindrische oder mehreckige Trommel (2) mit zwei Stirnwänden (22, 23) und mit einem gitterförmigen Trommelmantel (21) umfaßt, wobei diese Trommel (2) durch Verschwenken eines Trommelteils (20') geöffnet und geschlossen werden kann, wobei die Trommel (2) im geschlossenen Zustand zur Erzeugung eines mechanischen Reinigungseffektes um ihre Längsmittelachse (2') in Drehung versetzbar ist und wobei die Vorrichtung (1) mittels einer Tragarmanordnung (5) mit Kupplungseinrichtungen (60) eines Traktors oder dergl. Arbeitsfahrzeuges (6) kuppelbar und insgesamt heb- und senkbar sowie verfahrbar ist,
**dadurch gekennzeichnet,**
- daß im Inneren der Trommel (2) eine parallel zur Trommel-Längsmittelachse (2') entlang der Innenseite des Trommelmantels (21) über im wesentlichen dessen gesamte axiale Länge verlaufende Förderschnecke (3) angeordnet ist,
- daß die Förderschnecke (3) zumindest an ihrem einen Ende in der einen der beiden Trommelstirnwände (22; 23) drehbar gelagert und mit einem mit der Trommel (2) mitdrehbaren Drehantrieb (30) versehen ist, und
- daß an dem anderen, dem Drehantrieb (30) abgewandten Ende (31) der Förderschnecke (3) in der dortigen Trommelstirnwand (23) eine Austragöffnung (23') angeordnet ist.

2. Vorrichtung nach Anspruch 1, dadurch gekennzeichnet, daß der Durchmesser der Förderschnecke (3) etwa 1/10 bis 1/4 des Trommeldurchmessers beträgt.

3. Vorrichtung nach Anspruch 1 oder 2, dadurch gekennzeichnet, daß die Förderschnecke (3) über im wesentlichen ihre gesamte Länge und über 1/3 bis 2/3 ihres Umfanges von einer rinnenförmigen Blechwanne (32) umgeben ist, die überwiegend an der in Arbeitsdrehrichtung (29) der Trommel (2) weisenden Seite des Umfangbereiches der Förderschnecke (3) angeordnet ist.

4. Vorrichtung nach einem der Ansprüche 1 bis 3, dadurch gekennzeichnet daß der Trommelmantel (21) in dem in Arbeitsdrehrichtung (29) der Trommel (2) gesehen vor der Förderschnecke (3) liegenden Trommel-bereich in Richtung einer trommelinnenseitigen Tangente an den Förderschneckenumfang zum Trommelinneren hin eingezogen ist.

5. Vorrichtung nach einem der Ansprüche 1 bis 4, dadurch gekennzeichnet, daß ein Schneidwerkzeug (4) an oder vor der Austragöffnung (23') der Trommel (2) angebracht ist.

6. Vorrichtung nach dem Anspruch 5, dadurch gekennzeichnet, daß das Schneidwerkzeug (4) aus einem Außenring (40) und einer zentralen Nabe (41) sowie zwischen diesen turbinenschaufelartig angeordneten Schneidmessern (42) besteht.

7. Vorrichtung nach einem der Ansprüche 5 und 6, dadurch gekennzeichnet, daß das Schneidwerkzeug (4) abnehmbar und austauschbar ist.

8. Vorrichtung nach einem der Ansprüche 5 bis 7, dadurch gekennzeichnet, daß das Schneidwerkzeug (4) mittels seines Außenringes (40) bajonettverschlußartig mit der Stirnwand (23) der Trommel (2) an der Austragöffnung (23') verdrehfest verbindbar ist.

9. Vorrichtung nach einem der Ansprüche 5 bis 8, dadurch gekennzeichnet, daß die zentrale Nabe (41) des Schneidwerkzeuges (4) und das diesem zugewandte Ende der Förderschnecke (3) mit zusammenwirkenden, eine zweite Schneckenlagerung bildenden Zentrierungs- und Lagerungsmitteln versehen sind.

10. Vorrichtung nach einem der Ansprüche 1 bis 9, dadurch gekennzeichnet, daß die Trommel (2) entlang einer zur Trommel-Längsmittelachse (2') parallelen Ebene geteilt ist, daß der erste Teil (20) der Trommel (2) mit der Förderschnecke (3) und mit den Drehantriebsmitteln (30, 54) für die Förderschnecke (3) und für die Trommel (2) über die Tragarmanordnung (5) gehalten ist und daß der zweite Teil (20') der Trommel (2) über eine in der Mantelfläche der Trommel (2) liegende Scharnieranordnung (26) mittels eines Kraftantriebes (27) gegen den ersten Teil (20) der Trommel (2) zu deren Öffnen und Schließen verschwenkbar ist.

11. Vorrichtung nach dem Anspruch 10, dadurch gekennzeichnet, daß die Trommel (2) einen abgeflachten Mantelbereich (24) aufweist, daß die Teilungsebene durch die in Arbeitsdrehrichtung (29) der Trommel (2) nach vorn weisende Längskante (25) des abgeflachten Mantelbereiches (24) verläuft und daß diese Längskante (25) zur Bildung einer Ladeschaufel im Querschnitt keilförmig ausgebildet ist.

12. Vorrichtung nach dem Anspruch 11, dadurch gekennzeichnet, daß die Trommel (2) mittels einer Arretiereinrichtung (28, 28') zum einen in einer Stellung, in welcher der abgeflachte Mantelbereich (24) parallel zur Bodenoberfläche verläuft, und zum anderen in einer Stellung, in welcher die Förderschnecke (3) und das Schneidwerkzeug (4) ihre Austragposition einnehmen, festlegbar ist.

13. Vorrichtung nach einem der Ansprüche 1 bis 12, dadurch gekennzeichnet, daß der Trommelmantel (21) aus in Umfangsrichtung umlaufenden Profilen (21') sowie aus quer zu diesen verlaufenden und mit diesen verbundenen, die Mantelfläche bildenden Rundstäben oder Rohren (21'') gebildet ist.

14. Vorrichtung nach einem der Ansprüche 1 bis 13, dadurch gekennzeichnet, daß die Drehantriebe (30, 54) mit Hydraulikmotoren ausgebildet sind und daß der Kraftantrieb (27) aus hydraulischen Kolben-Zylinder-Einheiten gebildet ist.

## Claims

1. Transport and cleaning device for fodder crops, particularly turnips, potatoes, carrots, onions, cabbage or fruit like e.g. apples with the device (1) comprising a substantially cylindrical or polygonal drum (2) with two front walls (22, 23), and a grid-shaped drum jacket (21) wherein the drum (2) in the closed condition thereof is rotatable about the longitudinal centre axis (2') thereof for generating a mechanical cleaning effect, and wherein the device (1) may be coupled onto a coupling device of a tractor or the like working vehicle (6) by means of a bracket arrangement (5) and wherein the device in total is vertically and horizontally movable,
**characterized in**
that in the interior of the drum (2) a conveyor worm (3) is arranged extending in parallel with the drum longitudinal centre axis (2') along the inner side of the drum jacket (21) over the total axial length thereof, that the conveyor worm (3) at least at one end thereof is rotatably supported in the one of the two drum front walls (22, 23) and is provided with a rotational drive (30) rotatable together with the drum (2), and that at the other end (31) of the conveyor worm (3) facing away from the rotational drive (30) an output opening (23') is arranged at the drum front wall (23) there located.

2. Device according to claim 1, characterized in that the diameter of the the conveyor worm (3) is about 1/10 to 1/4 of the drum diameter.

3. Device according to claim 1 or 2, characterized in that the conveyor worm (3) along the substantially total length thereof and along 1/3 to 2/3 of the circumference thereof is encompassed by a channel-shaped sheet metal tub (32) which to the most part thereof is arranged at the side of the circumferential area of the conveyor worm (3) facing the operational turning direction (29) of the drum (2).

4. Device according to one of the claims 1 to 3, characterized in that the drum jacket (21) is reduced in the drum area positioned in front of the conveyor worm (3) as seen in the operational turning direction (29) of the drum (2) with the reduction in the direction of a tangent at the circumference of the conveyor worm in the interior of the drum towards the interior of the drum.

5. Device according to one of the claims 1 to 4, characterized in that a cutting tool (4) is arranged at or in front of the output opening (23') of the drum (2).

6. Device according to claim 5, characterized in that the cutting tool (4) consists of an outer ring (40) and a central hub (41), and cutting blades (42) arranged inbetween in form of turbine blades.

7. Device according to claim 5 and 6, characterized in that the cutting tool (4) is detachable and exchangeable.

8. Device according to one of the claims 5 to 7, characterized in that the cutting tool (4) is connectable with and fixed against rotation relative to the front wall (23) of the drum (2) by means of the outer ring (40) in form of a bayonet catch.

9. Device according to one of the claims 5 to 8, characterized in that the central hub (41) of the cutting tool (4) and the end of the conveyor worm (3) facing the cutting tool are provided with centering and supporting means cooperating to form a second conveyor worm bearing.

10. Device according to one of the claims 1 to 9, characterized in that the drum (2) is divided along a plane extending in parallel with the drum longitudinal centre axis (2'), and that the first part (20) of the drum (2) is secured with the conveyor worm (3), and with the rotational drive means (30, 54) for the conveyor worm (3), and for the drum (2) by the bracket arrangement (5), and that the second part (20') of the drum (2) is pivotable in relation to the first part (20) of the drum (2) for opening and closing the same by a hinge arrangement (26) positioned in the jacket area of the drum (2) and actuated by a power drive (27).

11. Device according to claim 10, characterized in that the drum (2) comprises a flattened jacket area (24), that the dividing plane extends through the longitudinal edge (25) of the flattened jacket area (24) facing forward in the operational turning direction (29) of th drum (2), and that the longitudinal edge is wedge-shaped in the cross-section thereof to form a loading shovel.

12. Device according to claim 11, characterized in that the drum (2) is securable by a locking device (28, 28') in one position wherein the flattened jacket area (24) extends in parallel with the ground surface, and in a further position wherein the conveyor worm (3) and the cutting tool (4) take their output positions.

13. Device according to one of the claims 1 to 12, characterized in that the drum jacket (21) is formed of contoured members (21') extending in circumferential direction and of round struts or pipes (21'') extending across the contoured members and connected thereto to form the jacket surface.

14. Device according to one of the claims 1 to 13, characterized in that the rotational drives (30, 54) comprise hydraulic motors, and that the power drive (27) comprises hydraulic piston/cylinder units.

## Revendications

1. Dispositif de transport et de nettoyage pour des végétaux destinés à l'alimentation animale, en particulier des betteraves, des pommes de terre, des carottes, des oignons, du choux ou des fruits, tels que par exemple des pommes, le dispositif (1) comprenant un tambour (2) sensiblement cylindrique ou polygonal, à deux parois frontales (22, 23) et avec une enveloppe de tambour (21) en forme de grille, ce tambour (2) pouvant être ouvert et fermé, par pivotement d'une partie de tambour (20'), le tambour pouvant être entraîné en rotation, autour de son axe longitudinal (2') à l'état fermé, pour produire un effet de nettoyage mécanique et le dispositif (1) étant susceptible d'être accouplé au moyen d'un agencement de bras support (5) à des organes d'accouplement (60) d'un tracteur ou d'un véhicule de travail (6) analogue et d'être globalement relevé et abaissé, et également transporté,
caractérisé en ce que,
- à l'intérieur du tambour (2) est disposée une vis transporteuse (3) s'étendant parallèlement à l'axe longitudinal de tambour (2'), le long de la face intérieure de l'enveloppe de tambour (21), sur pratiquement toute sa longueur axiale,
- la vis transporteuse (3) est montée à rotation au moins à l'une de ses extrémités dans l'une des deux parois frontales de tambour (22; 23) et est munie d'un entraînement en rotation (30), pouvant tourner conjointement avec le tambour (2), et
- à l'autre extrémité (31), opposée à l'entraînement en rotation (30), de la vis transporteuse (3), est disposée une ouverture d'évacuation (23'), ménagée dans la paroi frontale locale (23) du tambour.

2. Dispositif selon la revendication 1, caractérisé en ce que le diamètre de la vis transporteuse (3) est compris entre environ 1/10 et 1/4 du diamètre du tambour.

3. Dispositif selon la revendication 1 ou 2, caractérisé en ce que la vis transporteuse (3) est entourée sur pratiquement toute sa longueur et sur un 1/3 à 2/3 de sa périphérie par une auge ou bassine en tôle (32) en forme de goulotte, disposée principalement sur le côté de la zone périphérique de la vis transporteuse (3) qui est orienté dans la direction de rotation de travail (29) du tambour (2).

4. Dispositif selon l'une des revendications 1 à 3, caractérisé en ce que l'enveloppe de tambour (21) est déplacée en direction d'une tangente, située du côté intérieur du tambour, sur la périphérie de la vis transporteuse, dans la zone du tambour qui est située avant la vis transporteuse (3) lorsqu'on observe dans la direction de la rotation de travail (29) du tambour (2).

5. Dispositif selon l'une des revendications 1 à 4, caractérisé en ce qu'un outil de coupe (4) est monté sur ou devant l'ouverture d'évacuation (23') du tambour (2).

6. Dispositif selon la revendication 5, caractérisé en ce que l'outil de coupe (4) est composé d'une bague extérieure (40) et d'un moyeu central (41) ainsi que de lames de coupe (42) disposées entre ces deux éléments, à la façon d'aubes de turbine.

7. Dispositif selon l'une des revendications 5 et 6, caractérisé en ce que l'outil de coupe (4) est monté amovible et inter-changeable.

8. Dispositif selon l'une des revendications 5 à 7, caractérisé en ce que l'outil de coupe (4) est susceptible d'être relié, en rotation, au moyen de sa bague extérieure (40), à la façon d'une fermeture à baïonnette, à la paroi frontale (23) du tambour (2), sur l'ouverture d'évacuation (23').

9. Dispositif selon l'une des revendications 5 à 8 caractérisé en ce que le moyeu central (41) de l'outil de coupe (4) et l'extrémité, tournée vers cette outil, de la vis transporteuse (3) sont munis de moyens coopérants de centrage et de palier, qui constituent un deuxième palier pour la vis.

10. Dispositif selon l'une des revendications 1 à 9, caractérisé en ce que le tambour (2) est subdivisé le long d'un plan parallèle à l'axe longitudinal (2') du tambour, en ce que la première partie (20) du tambour (2) avec la vis (3) et avec les moyens d'entraînement en rotation (30, 54) destinés à la vis transporteuse (3) et au tambour (2) est supportée par l'intermédiaire de l'agencement de bras support (5) et en ce que la deuxième partie (20') du tambour (2) est susceptible de pivoter par l'intermédiaire d'un agencement de charnière (26) disposé dans la surface d'enveloppe du tambour (2), au moyen d'un entraînement mécanique (27), le pivotement s'effectuant par rapport à la première partie (20) du tambour (2), pour produire l'ouverture et la fermeture du tambour.

11. Dispositif selon la revendication 10, caractérisé en ce que le tambour (2) présente une zone d'enveloppe (24) aplatie ou en méplat, en ce que le plan de division passe par l'arête longitudinale (25), tournée vers l'avant dans le sens de rotation de travail (29) du tambour (2), de la zone d'enveloppe (24) aplatie et en ce que cette arête longitudinale (25) est réalisé avec une section transversale en coin pour constituer une pelle de chargement.

12. Dispositif selon la revendication 11, caractérisé en ce que le tambour (2) est susceptible d'être fixé au moyen d'un organe de blocage (28,28'), d'une part dans une position dans laquelle la zone d'enveloppe aplatie (24) court parallèlement à la surface du sol et, d'autre part, dans une position dans laquelle la vis transporteuse (3) et l'outil de coupe (4) prennent leur position d'évacuation.

13. Dispositif selon l'une des revendications 1 à 12, caractérisé en ce que l'enveloppe de tambour (21) est constituée de profilés (21') situés sur le pourtour en direction périphérique ainsi que de barres rondes ou de tubes (21'') courant transversalement à ces profilés et reliés à ces derniers et constituant la surface d'enveloppe.

14. Dispositif selon l'une des revendications 1 à 13, caractérisé en ce que les entraînements en rotation (30, 54) sont réalisé avec des moteurs hydrauliques et en ce que l'entraînement mécanique (27) est constitué de vérins hydrauliques piston-cylindre.
